# EUROPEAN PATENT APPLICATION

(11) **EP 4 776 205 A1**
(43) Date of publication of application: **15.07.2026**
(21) Application number: 25151854.4
(22) Date of filing: 14.01.2025
(51) Int. Cl.: G06Q 20/12, G06Q 20/32, G06Q 20/38, G06Q 20/40

(54) **BIOMETRIC AUTHENTICATION SERVICE AND METHODS**

(71) Applicant: Mastercard International Incorporated, Purchase, NY 10577 (US)
(72) Inventor: HAY, Florent, 1020 Laeken (BE); CAO, Qing, Purchase, 10577 (US); TARE, Sameer, Ballwin, 63021 (US)
(74) Representative: Keltie LLP

(57) **Abstract**

There is provided a payment network biometric authentication service for challenge-response authentication of a cardholder during a payment transaction. The service comprises: one or more processors; a memory storing instructions that, when executed by the one or more processors, cause the one or more processors to: receive notification of a challenge-response authentication request; send an authentication enabler to a challenge-response authentication server of a merchant; receive a challenge request for challenge-response authentication of the cardholder using the authentication enabler; perform biometric authentication of the cardholder to generate an authentication result; send the authentication result to an issuer access control server to decide whether to proceed with the payment transaction based on the authentication result; and send the authentication result to the merchant to approve or decline the payment transaction based on the authentication result. There is further provided a computer-implemented method, wherein the method is performed at a payment network biometric authentication service, for challenge-response authentication of a cardholder during a payment transaction. There is further provided a computer-implemented method, wherein the method is performed at a payment network biometric authentication service, for registration of a passkey for biometric authentication of a cardholder during a payment transaction. Further provided are corresponding computer program products.

## Description

### TECHNICAL FIELD

The present disclosure relates to a biometric authentication service. In particular, the present disclosure relates to a payment network biometric authentication service for challenge-response authentication of a cardholder during a payment transaction. The present disclosure further relates to a computer-implemented method for challenge-response authentication of a cardholder during a payment transaction. The present disclosure further relates to a computer-implemented method for registration of a passkey to be used for biometric authentication of a cardholder during a payment transaction.

### BACKGROUND

Online transactions where a payment card is not physically present are subject to fraud. 3D Secure (3DS) authentication uses multi-factor authentication to authenticate the cardholder and is designed to be an additional layer of security for online credit and debit card transactions.

Typically, use of 3DS multi-factor authentication requires a merchant to integrate with the 3DS network to allow the issuer of the cardholder to initiate an authentication. Multi-factor authentication can be performed using two or more of the following factors: verification of the user's identity using something they possess, e.g. a mobile device, something they are, e.g. some unique personal attribute such as biometric authentication or voice recognition, or something they know, e.g. a password.

Regarding biometric authentication, it requires a significant amount of time and effort to develop biometric authentication capabilities as part of multi-factor authentication and to maintain the infrastructure that is required. Furthermore, each issuer is required to develop and maintain the biometric authentication capabilities and this presents serious difficulties in the ability to scale the deployment of biometric authentication. Many issuers rely on alternative authentication methods such as SMS one-time password (OTP) which are less convenient and less secure, albeit easier to implement.

Moreover, the user experience in any multi-factor authentication process is impacted negatively as the merchant has limited control over the process, leading to a frictional checkout process and often cart abandonment.

The present disclosure has been devised to mitigate or overcome at least some of the above-mentioned problems.

### SUMMARY OF THE DISCLOSURE

According to a first aspect of the present disclosure, there is provided a payment network biometric authentication service for challenge-response authentication of a cardholder during a payment transaction. The service comprises: one or more processors; a memory storing instructions that, when executed by the one or more processors, cause the one or more processors to: receive notification of a challenge-response authentication request; send an authentication enabler to a challenge-response authentication server of a merchant; receive a challenge request for challenge-response authentication of the cardholder using the authentication enabler; perform biometric authentication of the cardholder to generate an authentication result; send the authentication result to an issuer access control server to decide whether to proceed with the payment transaction based on the authentication result; and send the authentication result to the merchant to approve or decline the payment transaction based on the authentication result.

The present disclosure provides technical advantages beyond the state of the art. The present disclosure enables a scalable, secure and convenient biometric authentication capability within 3DS authentication to be provided. The present disclosure enables a payment network to act as the relying party on behalf of an issuer and to provide biometric authentication services. The payment network can enrol and authenticate the cardholder during online payment transactions on behalf of the issuer and access control server, without requiring the issuer and access control server to implement new features or functionality.

Advantageously, the present disclosure enables biometric authentication to be adopted widely and scaled rapidly without the need for issuing banks to develop and maintain an in-house biometric authentication solution. The biometric authentication capability can be used for all users of the payment network, whereby the payment network acts as the relying party, regardless of the issuing bank of the cardholder. Biometric authentication at scale provides more secure, user-friendly and convenient way of authenticating the cardholder.

A further advantage of the present disclosure is that it can be used in both tokenized and non-tokenized transactions, which means that biometric authentication capability can be implemented without having to wait for any delays in achieving market tokenization readiness. The present disclosure enables a passkey to be implemented over a 3DS authentication network whereby the payment network acts as the relying party instead of the issuer, and this enables passkey authentication to be brought to non-tokenized card transactions as well as tokenized transactions.

Challenge-response authentication may comprise 3DS authentication.

The authentication enabler may comprise a web authentication payment network URL.

The authentication enabler may comprise web authentication payment network credentials.

The memory stores instructions that, when executed by the one or more processors, may further cause the one or more processors to: check whether a PAN associated with a payment card of the cardholder is enrolled with the payment network biometric authentication server.

Prior to sending the authentication result to the merchant, the memory stores instructions that, when executed by the one or more processors, may cause the one or more processors to send the authentication result to the issuer such that the issuer can perform risk management tests of the payment transaction in the decision as to whether to trigger an additional authentication.

Biometric authentication of the cardholder may be performed using a passkey.

The passkey may be registered with the payment network by the cardholder prior to merchant checkout.

The memory stores instructions that, when executed by the one or more processors, may cause the one or more processors to: notify the issuer to redirect the cardholder from an issuer domain to a payment network domain to register the passkey.

The passkey may be registered with the payment network by the cardholder during merchant checkout.

The memory stores instructions that, when executed by the one or more processors, may cause the one or more processors to: notify the merchant to redirect the cardholder from a merchant domain to a payment network domain to register the passkey.

According to a second aspect of the present disclosure, there is provided a computer-implemented method, wherein the method is performed at a payment network biometric authentication service, for challenge-response authentication of a cardholder during a payment transaction. The method comprises: receiving notification of a challenge-response authentication request; sending an authentication enabler to a challenge-response authentication server of a merchant; receiving a challenge request for authentication of the cardholder using the authentication enabler; performing biometric authentication of the cardholder to generate an authentication result; sending the authentication result to an issuer access control server to decide whether to proceed with the payment transaction based on the authentication result; and sending the authentication result to the merchant to approve or decline the payment transaction based on the authentication result.

According to a third aspect of the present disclosure, there is provided a computer-implemented method, wherein the method is performed at a payment network biometric authentication service, for registration of a passkey for biometric authentication of a cardholder during a payment transaction, the method comprising: receiving a payment card passkey registration request message comprising a request to register a passkey with a payment card; initiating creation of the passkey; sending an initiating passkey creation message to an issuer or merchant associated with the payment card; receiving a confirmation message indicating that the passkey has been created by the cardholder; updating a status of the payment card to confirm that the passkey has been registered with the payment card.

The method may comprise: notifying the issuer or the merchant to redirect the cardholder to a payment network domain to register the passkey.

According to a fourth aspect of the present disclosure, there is provided a computer program product comprising instructions which, when the program is executed by a computer, cause the computer to carry out the method according to the second aspect of the present disclosure.

According to a fifth aspect of the present disclosure, there is provided a computer program product comprising instructions which, when the program is executed by a computer, cause the computer to carry out the method according to the third aspect of the present disclosure.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1 is a schematic diagram showing components relevant for describing embodiments of the present disclosure; and
Figure 2 is a schematic diagram showing a typical user journey in registering a passkey using a banking application on a mobile device, in accordance with embodiments of the present disclosure;
Figure 3 is a sequence diagram showing the process of registering a passkey using a banking application on a mobile device, in accordance with embodiments of the present disclosure;
Figure 4 is a schematic diagram showing a typical user journey in registering a passkey from a merchant page during the checkout process, in accordance with embodiments of the present disclosure;
Figure 5 is a sequence diagram showing the process of registering a passkey from a merchant page during the checkout process, in accordance with embodiments of the present disclosure;
Figure 6 is a schematic diagram showing a typical user journey in completing a payment transaction using the passkey registered by the cardholder, in accordance with embodiments of the present disclosure.
Figure 7 is a sequence diagram showing the process of completing a payment transaction using the passkey registered by the cardholder, in accordance with embodiments of the present disclosure.
Figure 8 is a schematic diagram showing the hardware architecture of a mobile device suitable for implementing embodiments of the present disclosure;
Figure 9 is a schematic diagram showing the software architecture of a mobile device suitable for implementing embodiments of the present disclosure; and
Figure 10 is a schematic diagram showing a typical four-party model used in payment interactions between entities operating in a card scheme.

### DETAILED DESCRIPTION

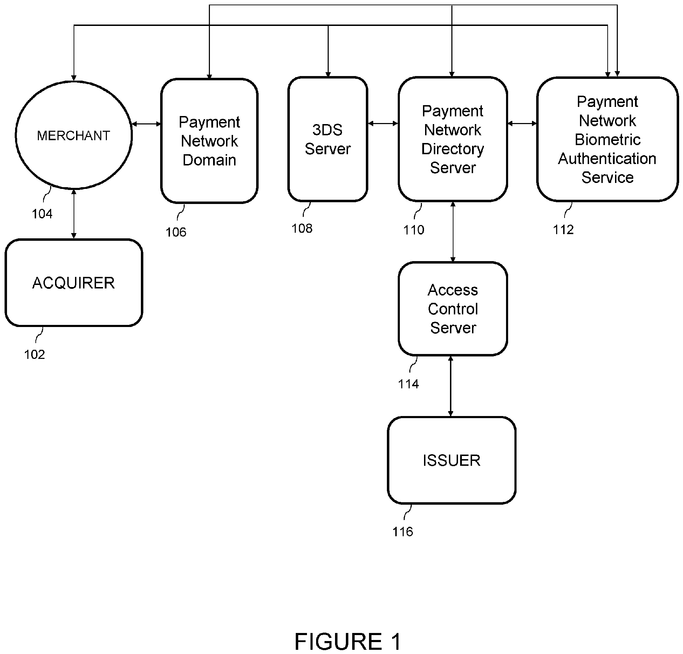

General and specific embodiments of the present disclosure are described below with reference to Figures 1 to 10.

The present disclosure relates to a payment network biometric authentication service for challenge-response authentication of a cardholder during a payment transaction, the service comprising: one or more processors; a memory storing instructions that, when executed by the one or more processors, cause the one or more processors to: receive notification of a challenge-response authentication request; send an authentication enabler to a challenge-response authentication server of a merchant; receive a challenge request for challenge-response authentication of the cardholder using the authentication enabler; perform biometric authentication of the cardholder to generate an authentication result; send the authentication result to an issuer access control server to decide whether to proceed with the payment transaction based on the authentication result; and send the authentication result to the merchant to approve or decline the payment transaction based on the authentication result.

The present disclosure also relates to a computer-implemented method, wherein the method is performed at a payment network biometric authentication service, for registration of a passkey for biometric authentication of a cardholder during a payment transaction, the method comprising: receiving a payment card passkey registration request message comprising a request to register a passkey with a payment card; initiating creation of the passkey; sending an initiating passkey creation message to an issuer or merchant associated with the payment card; receiving a confirmation message indicating that the passkey has been created by the cardholder; updating a status of the payment card to confirm that the passkey has been registered with the payment card.

The interaction between an acquirer 102, a merchant 104, a payment network domain 106, a 3D Secure (3DS) server 108, a payment network directory server 110, a payment network biometric authentication service 112, an access control server 114 and an issuer 116 is shown in Figure 1.

The acquirer 102 is in communication with the merchant 104, and the merchant 104 is in turn in communication with the payment network domain 106, the 3DS server 108 and the payment network biometric authentication service 112. The payment network domain 106 is in communication with the payment network directory server 110 and the payment network biometric authentication service 112. The 3DS server 108 is in communication with the payment network directory server 110. The payment network directory server 110 is in communication with the payment network biometric authentication service 112 and the access control server 114. The access control server 114 is in communication with the issuer 116.

The payment network biometric authentication service 112 is configured to enable biometric authentication of a cardholder's identity for the purpose of completing a payment transaction. The cardholder registers a passkey to be used for the biometric authentication.

In the context of the present disclosure, it is relevant to introduce FIDO. FIDO is a standard maintained by the FIDO alliance, based on public key cryptography that allows a FIDO-certified device to generate a signature on authentication elements, proving to the bank of the cardholder that the cardholder has been authenticated successfully. This signature is part of a blob called "FIDO assertion", which is verifiable by the relying party, using the public key of the key pair generated at the time of enrolment. The private key that generates the signatures remains on the mobile device. The present disclosure relates to a novel and inventive capability implemented for a payment network to provide a FIDO OBO validation service that has the ability to validate FIDO assertions, to be operated by the payment network and to be run over a 3DS authentication network.

### PASSKEY REGISTRATION

The registration of a passkey can be initiated from a banking application on a mobile device, i.e. outside of the checkout process, or from a merchant page during the checkout process.

### PASSKEY REGISTRATION USING BANKING APPLICATION

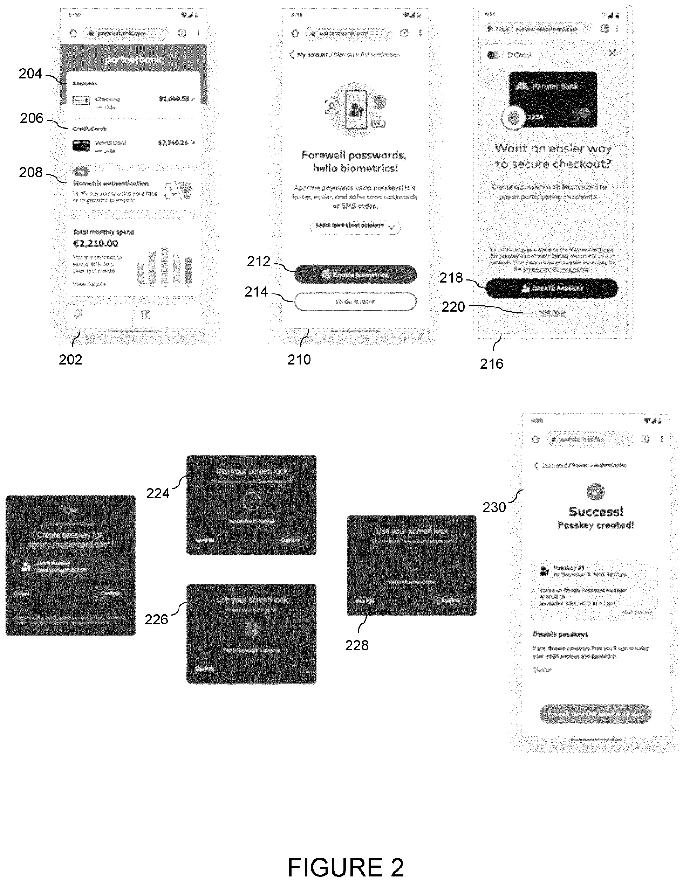

A typical user journey in registering a passkey using a banking application on a mobile device, i.e. outside of the checkout process, is shown in Figure 2. In this case, the cardholder can register a passkey with their payment network from within the banking application. In the present embodiment, the banking application is a non-limiting example of an issuer domain. The cardholder may register a passkey with their payment network from other issuer domains such as the issuer website. The passkey is associated to one or more payment cards belonging to the cardholder, whereby the payment cards are issued on the same payment network, and to the mobile device belonging to the cardholder. The passkey may be synchronised across multiple devices, e.g. using passkey vault cloud capabilities, such that the cardholder may use the passkey on multiple devices.

Once the cardholder has logged in to the banking application on their mobile device, a home page 202 of the mobile banking application is shown. The home page indicates the account(s) 204 and payment card(s) 206 held by the cardholder. The home page 202 includes a biometric authentication registration option 208 which indicates that payments can be verified using the cardholder's face or fingerprint biometric. The cardholder selects the biometric authentication registration option 208 to navigate to a biometric authentication registration page 210 of the banking application.

The biometric authentication registration page 210 provides further information about approving payments using passkeys. The biometric authentication registration page 210 also provides a biometric enablement option 212 and a biometric deferment option 214. The cardholder selects the biometric enablement option 212 to navigate to a passkey creation page 216 to create a passkey with the payment network associated with the payment network directory server that runs the payment network biometric authentication service. The passkey creation page 216 is on the payment network domain 106. In the present disclosure, Mastercard is used as a non-limiting example of a payment network, and secure.mastercard.com may be used as the payment network domain. Alternative payment network domains may be used, such as verify.mastercard.com, authenticate.mastercard.com, thatsme.mastercard.com, etc. The passkey is bound to the payment network domain. The passkey can be used to approve a payment transaction for goods and/or services at participating merchants and provides an easier, simpler and more streamlined way to complete a payment transaction. The passkey creation page 216 provides a passkey creation option 218 and a passkey deferment option 220.

The cardholder selects the passkey creation option 218 to create a passkey in the form of, for example, facial biometric authentication 224 or fingerprint biometric authentication 226. The cardholder confirms on a passkey confirmation page 228 that the cardholder's biometrics have been registered, after which the mobile banking application indicates 230 that the cardholder has successfully created a passkey. The passkey is associated to one or more payment cards belonging to the cardholder and issued on the same payment network, and the mobile device belonging to the cardholder.

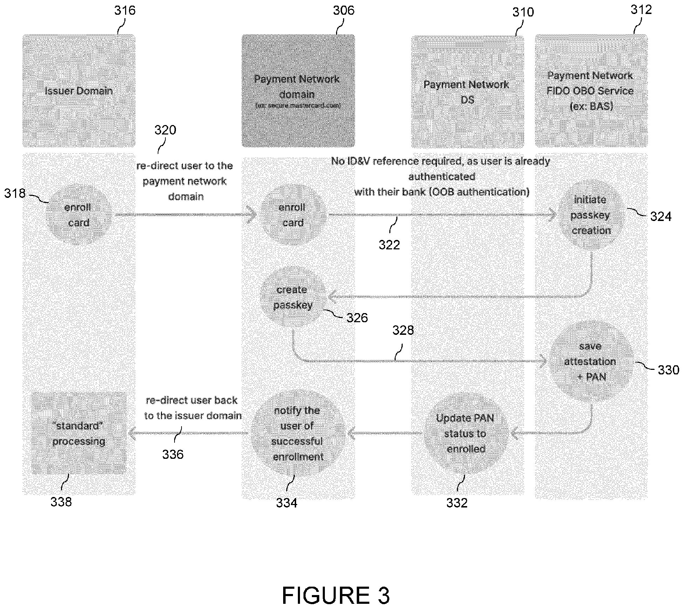

The process of registering a passkey using a banking application on a mobile device, i.e. outside of the checkout process, regarding interactions between the issuer domain 316, the payment network domain 306, the payment network directory server 310 and the payment network biometric authentication service 312 (also referred to herein as the payment network FIDO OBO service) is shown in Figure 3.

First, the issuer enrols, at Step 318, a payment card belonging to the cardholder in 3DS. The payment network biometric authentication service 312 provides the issuer with an indication to redirect the cardholder to a specified payment network URL, such as secure.mastercard.com or verify.mastercard.com, as part of a payment network proprietary extension, such that the payment network biometric authentication service 312 can create the passkey. Accordingly, the cardholder is redirected, at Step 320, to the payment network domain 306.

In this example, the cardholder is authenticated with their bank via out of band (OOB) authentication, so there is no requirement to perform additional authentication (ID&V) at this stage in the process. A payment card enrolment confirmation message 322 is sent to the payment network biometric authentication service 312. The payment network biometric authentication service 312 then initiates, at Step 324, a passkey creation message. Optionally, the indication to redirect the cardholder to a specified payment network URL may be included within the passkey creation message. The cardholder enrols, at Step 326, their biometrics at the payment network webpage and the passkey is communicated, at Step 328, to the payment network biometric authentication service 312.

The payment network biometric authentication service 312 saves, at Step 330, the attestation and PAN, and confirms that this has been completed with the payment network directory server 310. The payment network directory server 310 then updates, at Step 332, the PAN status to enrolled, and sends a notification to the payment network domain to notify, at Step 334, the user of successful enrolment. The payment network biometric authentication service 312 then redirects, at Step 336, the cardholder back to the issuer domain. At Step 338, the issuer continues standard processing of the transaction.

### PASSKEY REGISTRATION DURING CHECKOUT

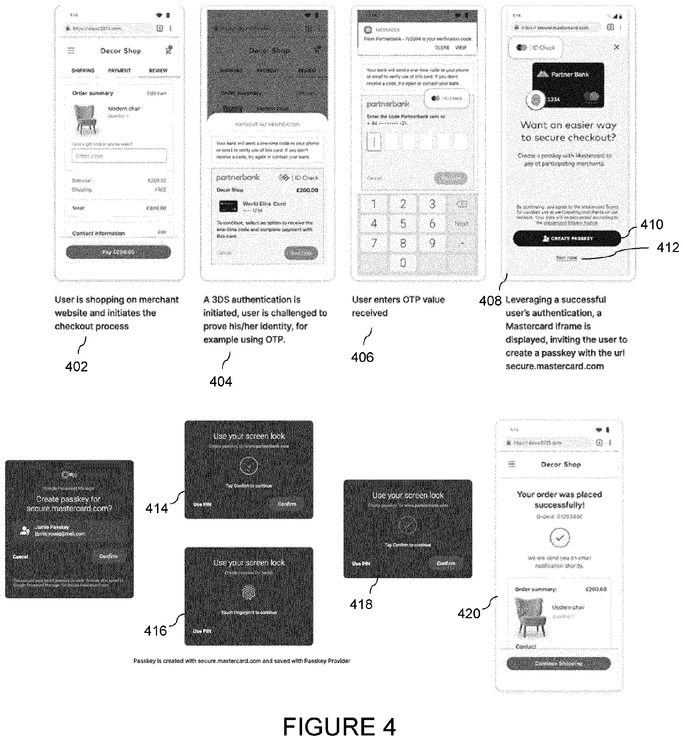

A typical user journey in registering a passkey from a merchant page during the checkout process, is shown in Figure 4. In this case, the cardholder can be authenticated by their bank during an EMV 3DS flow and prompted to create a passkey with the payment network to speed up future checkouts. The passkey is associated to the payment card used for the transaction, and to the mobile device belonging to the cardholder. The passkey may be synchronised across multiple devices, e.g. using passkey vault cloud capabilities, such that the cardholder may use the passkey on multiple devices.

The cardholder is shopping on a merchant website or app and initiates the checkout process, e.g. by pressing or clicking on the "Pay" button 402. A 3DS authentication challenge with the issuer access control server is then initiated 404 and the cardholder is challenged to prove their identity, for example using a one-time password (OTP). It should be noted that the OTP is used here as an exemplary authentication method and that alternative authentication methods may be used over 3DS. The OTP is sent to the cardholder's mobile device. The cardholder enters 406 the OTP value when prompted.

After the cardholder has been authenticated successfully using the OTP, a passkey creation page 408, otherwise called a payment network iframe in the present disclosure, is displayed.

The passkey creation page 408 invites the cardholder to create a passkey with the payment network associated with the payment network directory server that runs the payment network biometric authentication service. The cardholder is redirected to the payment network domain to create the passkey. As part of the 3DS flow, the payment network notifies the merchant to redirect the cardholder to a payment network environment so that the cardholder can register a FIDO passkey. The FIDO passkey can be used for all subsequent payments, including to other merchants. In this particular example, Mastercard is a non-limiting example of a payment network and the passkey can be created with Mastercard using the URL secure.mastercard.com. Alternative payment network domains may be used, such as verify.mastercard.com, authenticate.mastercard.com, thatsme.mastercard.com, etc. The passkey can be used to pay for goods and/or services at participating merchants and provides an easier, simpler and more streamlined way to complete a payment transaction.

The passkey creation page 408 provides a passkey creation option 410 and a passkey deferment option 412.

The cardholder selects the passkey creation option 410 to create a passkey in the form of, for example, facial biometric authentication 414 or fingerprint biometric authentication 416. The cardholder confirms on a passkey confirmation page 418 that the cardholder's biometrics have been registered. Once the passkey has been created, the cardholder is redirected back to the merchant domain to complete their checkout. The mobile banking application then indicates 420 that the cardholder has successfully created a passkey. The passkey is associated to the payment card used for the transaction, and to the mobile device belonging to the cardholder. The passkey can be saved using, for example, a passkey provider.

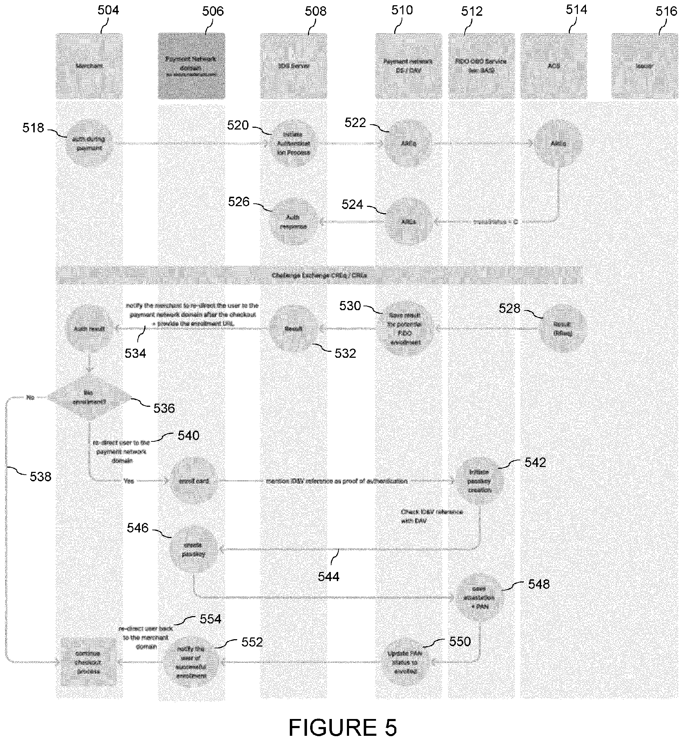

The process of registering a passkey from a merchant page during the checkout process, regarding interactions between the merchant 504, the payment network domain 506, the 3DS server 508, the payment network directory server 510, payment network biometric authentication service 512, and the access control server 514 and issuer 516 is shown in Figure 5.

First, the merchant 504 performs, at Step 518, authentication during the payment process. The 3DS server 508 initiates, at Step 520, the authentication process and sends an authentication request message (AREq) 522 to the payment network directory server 510. The payment network directory server 510 sends the AREq 522 onto the access control server 514. The issuer 516 provides a response to the AREq in the form of an authentication response message (AREs) 524. The access control server 514 sends the AREs 524 to the payment network directory server 510. The payment network directory server 510 formats the AREs 524 into an authorisation response 526 and sends the authorisation response 526 to the 3DS server 508.

The access control server 514 sends a results request (RReq) message 528 to the payment network directory server 510. The RReq message 528 can include: a unique identifier for the transaction, assigned by the 3DS server; specification of the message type as `RReq'; indication of the version of the 3DS protocol; specification the authentication method used; the status of the authentication (successful or failed); indication of whether the results of the transaction are being requested; transaction identifiers assigned by the directory server and the access control server. Optionally. The RReq message can also include: an identifier for the transaction in the 3DS SDK, if applicable; reason for challenge cancellation (e.g. cardholder cancelled); and/or indication of whether the cardholder is on the whitlelist status.

The payment network directory server 510 saves, at Step 530, the result for potential FIDO enrolment, and sends the result 532 to the 3DS server 508 and onto the merchant 504. Additional data elements may be introduced by the payment network to indicate to the merchant that the payment card is eligible for enrolment into biometric authentication, as well as to indicate the enrolment URL that is to be used to enrol the cardholder.

The payment network biometric authentication service 512 notifies, at Step 534, the merchant 504 to redirect the user to the payment network domain 506 after checkout and provides the enrolment URL.

Following this successful identification and verification (ID&V) with the issuer of the cardholder in a 3DS authentication context, the merchant 504 checks, at Step 536, whether the cardholder would like to proceed with enrolling for biometric authentication. If the cardholder does not wish to proceed with enrolling for biometric authentication, the merchant continues, at Step 538, its usual checkout process for completing the payment transaction during checkout.

If the cardholder does wish to proceed with enrolling for biometric authentication, the merchant 504 redirects, at Step 540, the cardholder to the payment network domain 506 to enrol the payment card being used for the payment transaction in 3DS. In this example, the merchant provides proof of authentication to the payment network biometric authentication service by mentioning the ID&V reference. A payment card enrolment confirmation message is sent to the payment network biometric authentication service 512. The payment network biometric authentication service 512 checks the ID&V reference with the directory server.

The payment network biometric authentication service 512 then initiates, at Step 542, a passkey creation message and sends, at Step 544, the passkey creation message to the payment network domain 506.

Prior to redirecting the cardholder to the payment network domain 506, the payment network biometric authentication service 512 provides the merchant with an indication to redirect the cardholder to the specified payment network URL, such as secure.mastercard.com or verify.mastercard.com, as part of a payment network proprietary extension, such that the payment network biometric authentication service 512 can create the passkey. Optionally, this indication to redirect the cardholder may be included within the passkey creation message.

The cardholder enrols their biometrics at the payment network webpage, i.e. creates, at Step 546, the passkey, and the passkey is communicated to the payment network biometric authentication service. The payment network biometric authentication service saves, at Step 548, the attestation and PAN, and confirms that this has been completed with the payment network directory server. The payment network directory server 510 then updates, at Step 550, the PAN status to enrolled, and sends a notification to the payment network domain 506 to notify, at Step 552, the user of successful enrolment. The payment network biometric authentication service 512 then redirects, at Step 554, the cardholder back to the merchant domain to continue the checkout process.

### USE OF PASSKEY IN PAYMENT TRANSACTION

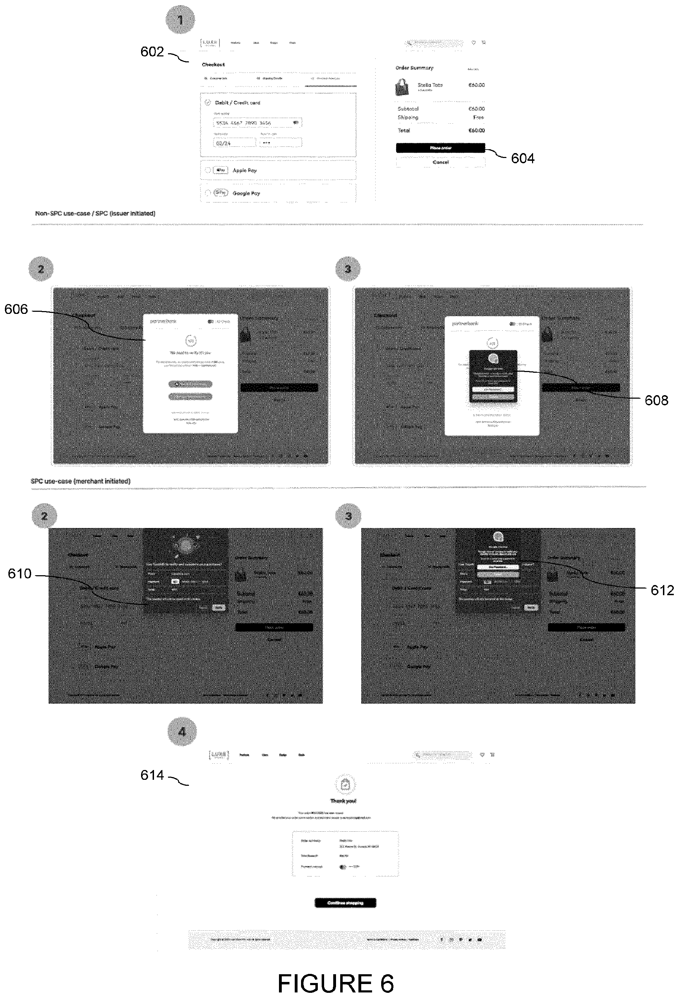

A typical user journey in completing a payment transaction using the passkey is shown in Figure 6. The cardholder begins by entering their payment card details at a merchant checkout page 602 and proceeding to place the order using the 'place order' button 604. Two use cases for authenticating the cardholder during the transaction are shown in Figure 6: a) non-SPC (Secure Payment Confirmation) use case or issuer/payment network-initiated SPC use case; and b) a merchant-initiated SPC use case.

The W3C Secure Payment Confirmation (SPC) API is a web standard that enhances online payment security and simplifies user authentication using WebAuthn and public-key cryptography. It allows users to securely approve payments with strong, phishing-resistant authentication (e.g., biometrics or PIN) directly in the browser, reducing friction during checkout. SPC is designed to integrate seamlessly with existing payment protocols like 3-D Secure, improving both security and user experience.

In the non-SPC use case, either the merchant does not support SPC or the web SPC API is not available in the web browser. The issuer may support SPC in the issuer-initiated SPC use case. The cardholder is redirected to a user interface 606 that is controlled by the payment network, i.e. a payment network domain. The cardholder can then be authenticated using their passkey either through the SPC API or by triggering directly the biometric prompt 608.

In the merchant-initiated SPC use case, the merchant does support SPC API. The cardholder is presented with a banner or a pop-up 610, that is initiated by the merchant and controlled by the browser or application, to verify the cardholder's identity. The cardholder can then be authenticated using their passkey registered with the payment network through a biometric prompt banner or pop-up 612. This represents a capability brought by the W3C SPC API: the capability for a merchant to initiate a FIDO authentication using third party FIDO credentials such as a passkey set up with the cardholder's bank or payment network.

Once the cardholder has been authenticated using their payment network's FIDO credentials, a confirmation page 614 is presented by the merchant to indicate that the payment transaction has been completed successfully.

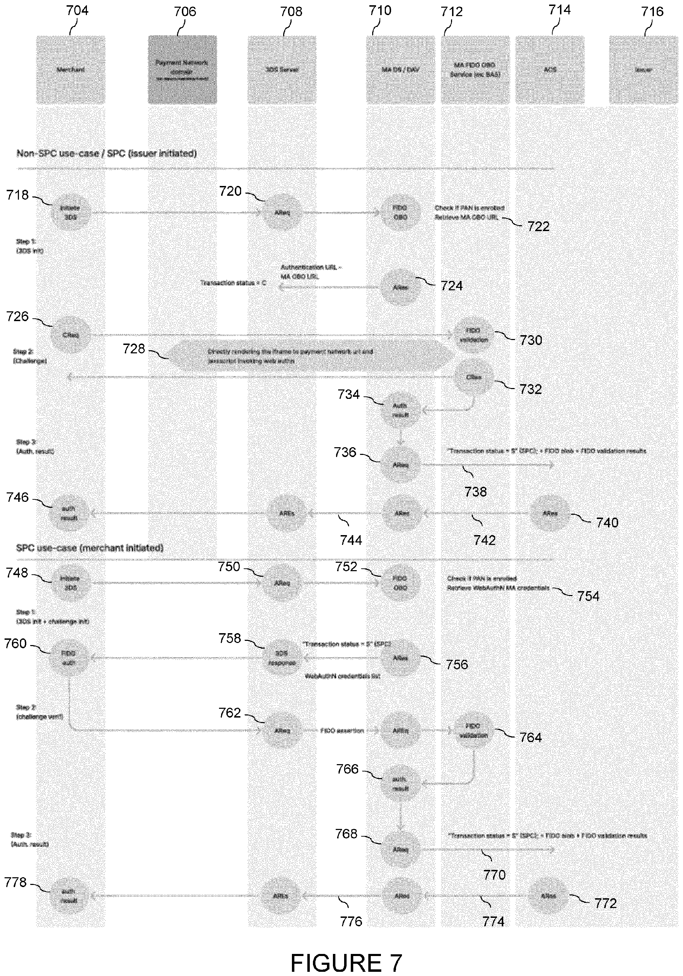

The process of completing a payment transaction using the passkey is shown in Figure 7. The process relates to a FIDO authentication protocol providing phishing-resistant authentication capability due to specific characteristics that mitigate traditional credential phishing attacks, namely: challenge-response mechanism, origin binding, and client-side user verification. The process in each of two use cases for authenticating the cardholder are shown in Figure 7: a) non-SPC (Secure Payment Confirmation) use case or issuer/payment network-initiated SPC use case; and b) a merchant-initiated SPC use case.

### NON-SPC USE CASE / ISSUER-INITIATED OR PAYMENT NETWORK-INITIATED SPC USE CASE

Starting with the non-SPC (Secure Payment Confirmation) use case or issuer/payment network-initiated SPC use case, the process can be performed in three steps:

| | |
|---|---|
| Step 1: | 3DS initiation; |
| Step 2: | Challenge; and |
| Step 3: | Authentication result. |

In Step 1 (3DS initiation), the merchant 704 sends a 3DS initiation message 718 to the 3DS server 708 and the 3DS server 708 then sends an authorisation request message (AReq) 720 to the payment network directory server 710. The payment network directory server 710 checks if the PAN is enrolled and retrieves an authentication enabler: in this case, the authentication enabler comprises the payment network biometric authentication URL 722 (a standard 3DS flow would provide the AReq message to the Issuer ACS). The payment network directory server 710 sends an authorisation response message (ARes) 724 on behalf of the Issuer 716 to the 3DS server 708 whereby the ARes 724 comprises the authentication enabler, whereby the authentication enabler comprises the payment network biometric authentication URL 722, instead of an Issuer/ACS URL.

In Step 2 (Challenge), the merchant 704 sends a challenge request message (CReq) 726 to the payment network biometric authentication service 712, directly rendering, at Step 728, the iframe to the payment network biometric authentication URL 722 and javascript invoking web authentication. The web authentication API can be used to authenticate the cardholder using public key cryptography. The payment network biometric authentication service 712 performs biometric validation 730. The payment network biometric authentication service 712 then sends a challenge response message (CRes) 732, which comprises an authentication result 734 indicating whether the cardholder has been authenticated successfully, to the merchant 704 and to the payment network directory server 710. The payment network directory server 710 formats the authentication result 734 into an AReq 736.

In Step 3 (Authentication result), the payment network directory server 710 sends, at Step 738, the AReq 736 to the access control server 714. Although the transaction is not an SPC transaction, the payment network directory server 710 would indicate a Transaction Status = "S" (for SPC), along with the FIDO blob that has been used to authenticate the cardholder (in case the Issuer subscribed to receive this information) and the results of the FIDO validation.

The issuer access control server decides whether to proceed with the payment transaction based on the authentication result provided within the AReq 736. The issuer access control server may perform risk management tests in the decision as to whether to trigger an additional authentication or to proceed with the payment transaction since the authentication is completed by the payment network.

The access control server 714 formats and sends, at Step 742, an authorisation response message (ARes) 740 to the payment network directory server 710. The ARes 740 indicates whether the issuer has decided to proceed with the payment transaction. The ARes 740 is sent, at Step 744, to the 3DS server 708 and onto the merchant 704 as an authentication result 746, such that the merchant 704 can approve or decline the payment transaction based on the authentication result 746.

### MERCHANT-INITIATED SPC USE CASE

The process for the merchant-initiated SPC use case can be performed in three steps:

| | |
|---|---|
| Step 1: | 3DS initiation; |
| Step 2: | Challenge verification; and |
| Step 3: | Authentication result. |

In Step 1 (3DS initiation), the merchant 704 sends a 3DS initiation message 748 to the 3DS server 708 and the 3DS server 708 then sends an authorisation request message

(AReq) 750 to the payment network directory server 710. The payment network directory server 710 checks if the PAN is enrolled and retrieves an authentication enabler: in this case, the authentication enabler comprises the web authentication payment network biometric authentication credentials 754. Web authentication payment network biometric authentication credentials are also referred to herein as FIDO credentials.

The payment network directory server 710 sends an authorisation response message (ARes) 756 to the 3DS server 708. The ARes 756 comprises the authentication enabler, which comprises the FIDO credentials 754 to be used, and a flag to indicate an SPC transaction. The payment network directory server 710 returns the payment network FIDO credentials to be used to the merchant 704. The 3DS server 708 provides a 3DS response 758 to the merchant 704. The merchant 704 initiates the authentication 760, using the web SPC API with the transaction details and a reference to the payment network credentials 754 to be used. This triggers a request for biometric authentication to the cardholder.

In Step 2 (Challenge verification), the merchant 704 sends a second authorisation request message (AReq) 762 comprising the FIDO assertion to the payment network biometric authentication service 712 via the 3DS server 708 up to the payment network directory server 710. The payment network biometric authentication service 712, integrated with the payment network directory server 710, performs biometric validation 764 to verify the FIDO assertion. The payment network biometric authentication service 712 then sends an authentication result 766 to the payment network directory server 710 which formats the authentication result 766 into an AReq message 768 for communication to the Issuer access control server 714.

In Step 3 (Authentication result), the payment network directory server 710 sends, at Step 770, the AReq 768 to the access control server 714. The AReq 768 comprises the flag to indicate an SPC transaction (Transaction Status = "S" (for SPC)) along with the FIDO blob that has been used to authenticate the user (in case the Issuer subscribed to receive the information) and the FIDO validation results.

The issuer access control server 714 decides whether to proceed with the payment transaction based on the authentication result provided within the AReq 768. The issuer may perform risk management tests in the decision as to whether to trigger an additional authentication or to proceed with the payment transaction since the authentication is completed by the payment network. The access control server 714 formats and sends, at Step 774, an authorisation response message (ARes) 772 to the payment network directory server 710. The ARes 772 indicates whether the issuer has decided to proceed with the payment transaction. The ARes 772 is sent, at Step 776, to the 3DS server 708 and onto the merchant 704 as an authentication result 778, such that the merchant 704 can approve or decline the payment transaction based on the authentication result 778.

### HARDWARE ARCHITECTURE OF MOBILE COMPUTING DEVICE

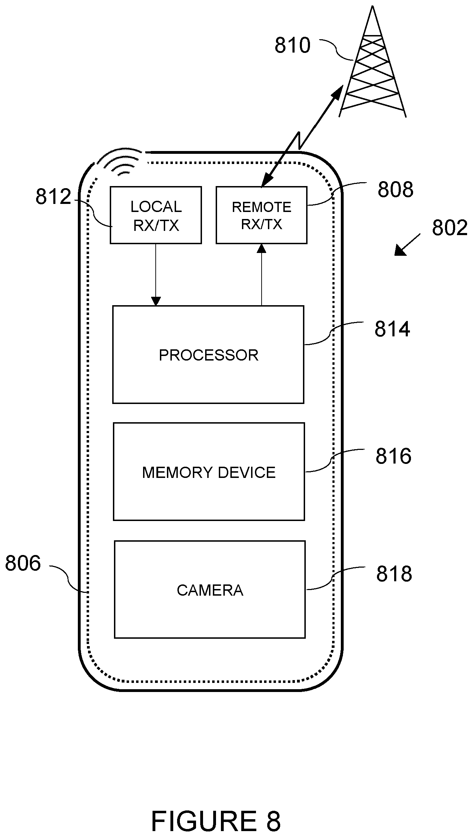

Figure 8 shows the hardware architecture of a smartphone 802 which is suitable for use with embodiments of the present disclosure. The term 'smartphone' may be used synonymously herein with 'mobile cellular telecommunications handset' or 'mobile phone' or 'mobile device'. Other mobile computing devices may be used instead of the smartphone 802. The mobile computing device may be another type of computing device such as a tablet or a laptop computer. The mobile computing device need not have cellular telecommunications capabilities (so long as some form of data connection, such as a Wi-Fi or Ethernet connection, is available).

In general, mobile computing devices comprising the hardware elements shown in the smartphone 802 of Figure 8 are suitable for use with embodiments of the present disclosure.

The smartphone 802 has a display 806 providing, in this example, a touchscreen user interface. The smartphone 802 is equipped with a remote wireless telecommunications apparatus comprising a remote transmitter/receiver 808 for communication with a wireless telecommunications network 810. The smartphone 802 is also equipped with a local wireless telecommunications apparatus comprising a local transmitter/receiver 812 for communication with a local transaction device. For example, the local transmitter/receiver 812 may comprise an NFC receiver to enable the smartphone 802 to receive data from the local transaction device which is capable of transmitting data via NFC. The local transmitter/receiver 812 may also comprise an NFC transmitter for transmitting data from the smartphone 802 to the local transaction device or other suitable local device.

In some embodiments, the smartphone 802 has an NFC controller chip, which includes both an NFC transmitter and an NFC receiver. The NFC controller chip is configured to adhere to at least the ISO 14443 standards, and the relevant EMV standards. The smartphone 802 further comprises a processor 814, a memory device 816, and a camera 818. The camera 818 may be used to provide biometric authentication of the cardholder.

### SOFTWARE ARCHITECTURE OF MOBILE COMPUTING DEVICE

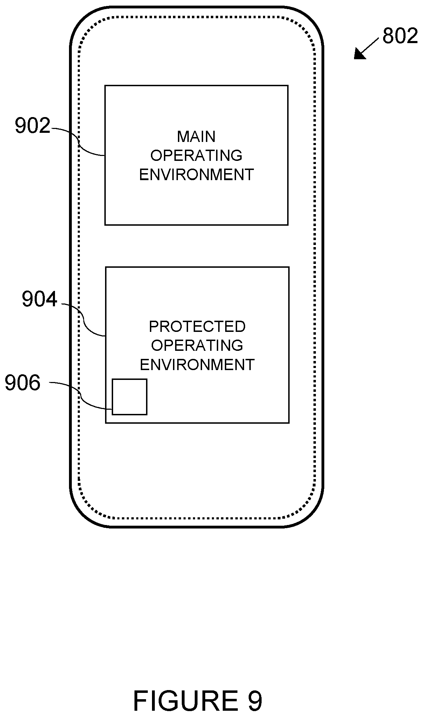

Figure 9 shows the software architecture of the smartphone 802 shown in Figure 8. The software architecture has a main operating environment 902 and a protected operating environment 904.

The main operating environment 902 may be used with a generic operating system such as iOS or Android. The main operating environment 902 comprises a mobile service application. The main operating environment 902 also comprises other applications that are normally needed by such a mobile computing device, such as a browser, a modem and a camera driver (not shown).

The protected operating environment 904 may be a Subscriber Identity Module SIM, Universal Integrated Circuit Card UICC, a Secure Element or a hardware backed Trusted Execution Environment. Alternatively, there may be a sandbox or other logically protected environment in the main operating environment to provide a secure environment. This may involve using one or more external resources to provide a secure environment.

The protected operating environment 904 may comprise a mobile banking application 906 or `app' for making payments or withdrawing cash at an ATM. The mobile banking application 906 can be accessed by a user of the smartphone 802. Alternatively, the elements relevant to the security of the mobile banking application 906 may be comprised in the protected operating environment. The mobile banking application 906 may be located within the SIM or within another physically or logically protected environment. Alternatively, some parts of the mobile banking application 906 may be situated in the protected operating environment. Further, data from the mobile banking application 906 may be located in a protected memory.

### FOUR-PARTY TRANSACTION MODEL

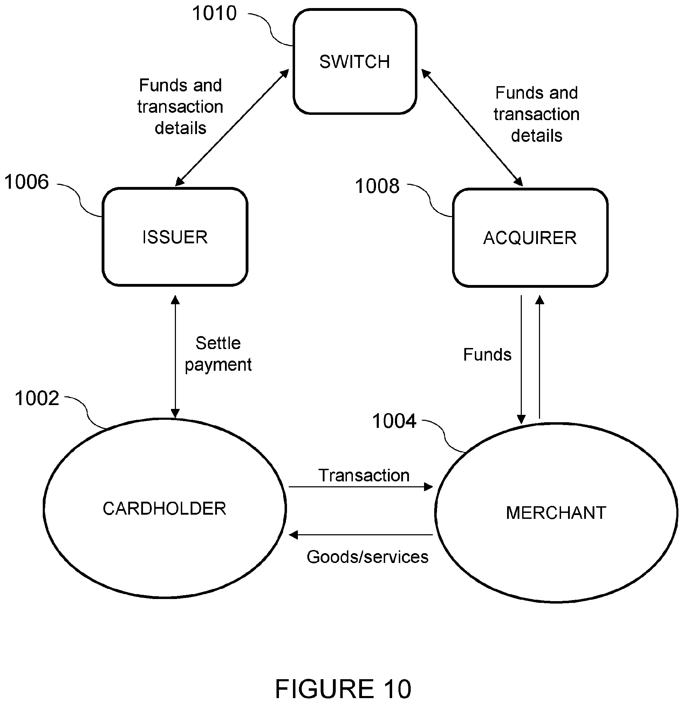

A typical four-party model used in payment interactions between entities operating in a card scheme is shown in Figure 10.

Normally, card schemes - payment networks linked to payment cards - are based on one of two models: a three-party model or a four-party model (adopted by Mastercard and others). For the purposes of this document, the four-party model is described in further detail below.

The four-party model may be used as a basis for the transaction network. For each transaction, the model comprises four entity types: cardholder 1002, merchant 1004, issuer 1006 and acquirer 1008. In this model, the cardholder 1002 purchases goods or services from the merchant 1004. The issuer 1006 is the bank or any other financial institution that issued the card to the cardholder 1002. The acquirer 1008 provides services for card processing to the merchant 1004.

The model also comprises a central switch 1010 - interactions between the issuer 1006 and the acquirer 1008 are routed via the switch 1010. The switch 1010 enables a merchant 1004 associated with one particular bank (acquirer 1008) to accept payment transactions from a cardholder 1002 associated with a different bank (issuer 1006).

A typical transaction between the entities in the four-party model can be divided into three main stages: authorisation, clearing and settlement. The cardholder 1002 initiates a purchase of goods or services from the merchant 1004 using their payment card or other transaction device. Details of the card and the transaction are sent to the issuer 1006 via the acquirer 1008 and the switch 1010 to authorise the transaction. Should the transaction be considered abnormal by the issuer 1006, the cardholder 1002 may be required to undergo a verification process to verify their identity and the details of the transaction. Once the verification process is complete the transaction is authorised.

On completion of the transaction between the cardholder 1002 and the merchant 1004, the transaction details are submitted by the merchant 1004 to the acquirer 1008 for clearing and settlement. Clearing is the process by which merchants 1004 and their acquirers 1008 submit the definitive list of transactions performed. Settlement is the final transfer of funds between parties. Clearing and settlement processes are typically determined by the network 1010.

Separately, the issuer 1006 and the cardholder 1002 settle the payment amount between them. A service fee is paid to the acquirer 1008 by the merchant 1004 for each transaction, and an interchange fee is paid to the issuer 1006 by the acquirer 1008 in return for the settlement of funds.

In summary, for a typical transaction, the four-party model comprises four entity types: cardholder 1002, merchant 1004, issuer 1006 and acquirer 1008. In this model, the cardholder 1002 purchases goods or services from the merchant 1004. The issuer 1006 is the bank or any other financial institution that issued the card to the cardholder 1002. The acquirer 1008 provides services for card processing to the merchant 1004. In certain transaction types, other arrangements are possible - for example, transactions are possible where the issuer 1006 and the acquirer 1008 are the same entity, in which case no routing of the transaction between the two is required. Furthermore, it is possible to have a four-party model that works using only a single message (where the authorisation, clearing and settlement can all happen at the same time).

Many modifications may be made to the specific embodiments described above without departing from the scope of the invention as defined in the accompanying claims. Features of one embodiment may also be used in other embodiments, either as an addition to such embodiment or as a replacement thereof.

### DEFINITIONS

### 3D Secure (3DS):

An authentication protocol designed to support the safety of online credit and debit card transactions, e.g. using two-factor authentication, by requiring cardholders to verify their identity beyond simply providing their card details.

Out of Band (OOB) Authentication:
An authentication method that is used as a part of multi-factor authentication (MFA) or 2FA that verifies the identity of a user from two different communications channels, ensuring robust security.

Fast Identity Online (FIDO) authentication:
Use of public key cryptography techniques to provide phishing-resistant authentication. FIDO (Fast Identity Online) is a set of open standards for secure, passwordless authentication using public-key cryptography. It allows users to authenticate with biometrics, security keys, or device-based credentials, offering strong phishing resistance and eliminating the need for shared secrets like passwords.

Secure Payment Confirmation (SPC):
A Web API to support streamlined authentication during a payment transaction. The W3C Secure Payment Confirmation (SPC) API is a web standard that enhances online payment security and simplifies user authentication using WebAuthn and public-key cryptography. It allows users to securely approve payments with strong, phishing-resistant authentication (e.g., biometrics or PIN) directly in the browser, reducing friction during checkout. SPC is designed to integrate seamlessly with existing payment protocols like 3-D Secure, improving both security and user experience.

## Claims

1. A payment network biometric authentication service for challenge-response authentication of a cardholder during a payment transaction, the service comprising:
one or more processors;
a memory storing instructions that, when executed by the one or more processors, cause the one or more processors to:
receive notification of a challenge-response authentication request;
send an authentication enabler to a challenge-response authentication server of a merchant;
receive a challenge request for challenge-response authentication of the cardholder using the authentication enabler;
perform biometric authentication of the cardholder to generate an authentication result;
send the authentication result to an issuer access control server to decide whether to proceed with the payment transaction based on the authentication result; and
send the authentication result to the merchant to approve or decline the payment transaction based on the authentication result.

2. The payment network biometric authentication service of Claim 1, wherein challenge-response authentication comprises 3DS authentication.

3. The payment network biometric authentication service of Claim 1 or Claim 2, wherein the authentication enabler comprises a web authentication payment network URL.

4. The payment network biometric authentication service of Claim 1 or Claim 2, wherein the authentication enabler comprises web authentication payment network credentials.

5. The payment network biometric authentication service of any previous claim, wherein the memory stores instructions that, when executed by the one or more processors, further cause the one or more processors to:
check whether a PAN associated with a payment card of the cardholder is enrolled with the payment network biometric authentication server.

6. The payment network biometric authentication service of any previous claim, wherein prior to sending the authentication result to the merchant, the memory stores instructions that, when executed by the one or more processors, cause the one or more processors to send the authentication result to the issuer such that the issuer can perform risk management tests of the payment transaction in the decision as to whether to trigger an additional authentication.

7. The payment network biometric authentication service of any previous claim, wherein biometric authentication of the cardholder is performed using a passkey.

8. The payment network biometric authentication service of Claim 7, wherein the passkey is registered with the payment network by the cardholder prior to merchant checkout.

9. The payment network biometric authentication service of Claim 8, wherein the memory stores instructions that, when executed by the one or more processors, cause the one or more processors to: notify the issuer to redirect the cardholder from an issuer domain to a payment network domain to register the passkey.

10. The payment network biometric authentication service of Claim 7, wherein the passkey is registered with the payment network by the cardholder during merchant checkout.

11. The payment network biometric authentication service of Claim 10, wherein the memory stores instructions that, when executed by the one or more processors, cause the one or more processors to: notify the merchant to redirect the cardholder from a merchant domain to a payment network domain to register the passkey.

12. A computer-implemented method, wherein the method is performed at a payment network biometric authentication service, for challenge-response authentication of a cardholder during a payment transaction, the method comprising:
receiving notification of a challenge-response authentication request;
sending an authentication enabler to a challenge-response authentication server of a merchant;
receiving a challenge request for authentication of the cardholder using the authentication enabler;
performing biometric authentication of the cardholder to generate an authentication result;
sending the authentication result to an issuer access control server to decide whether to proceed with the payment transaction based on the authentication result; and
sending the authentication result to the merchant to approve or decline the payment transaction based on the authentication result.

13. A computer-implemented method, wherein the method is performed at a payment network biometric authentication service, for registration of a passkey for biometric authentication of a cardholder during a payment transaction, the method comprising:
receiving a payment card passkey registration request message comprising a request to register a passkey with a payment card;
initiating creation of the passkey;
sending an initiating passkey creation message to an issuer or merchant associated with the payment card;
receiving a confirmation message indicating that the passkey has been created by the cardholder;
updating a status of the payment card to confirm that the passkey has been registered with the payment card.

14. The computer-implemented method of Claim 13, wherein the method comprises: notifying the issuer or the merchant to redirect the cardholder to a payment network domain to register the passkey.

15. A computer program product comprising instructions which, when the program is executed by a computer, cause the computer to carry out the method of Claim 12 or the method of Claim 13.
